# EUROPÄISCHE PATENTSCHRIFT

(11) **EP 1 006 041 B1**
(45) Veröffentlichungstag und Bekanntmachung des Hinweises auf die Patenterteilung: **15.02.2006**
(21) Anmeldenummer: 99122277.9
(22) Anmeldetag: 09.11.1999
(51) Int. Cl.: B62D 5/06, B62D 5/30

(54) **Hydraulische Servolenkung für Kraftfahrzeuge**
Power-assisted hydraulic steering for motor vehicles
Direction hydraulique assistée pour véhicules automobiles

(30) Priorität: 01.12.1998 DE 19855404
(43) Veröffentlichungstag der Anmeldung: 07.06.2000
(73) Patentinhaber: ThyssenKrupp Presta SteerTec GmbH, 40476 Düsseldorf (DE)
(72) Erfinder: Beckmann, Detlef, 73666 Baltmannsweiler (DE); Kind, Thomas, 70599 Stuttgart (DE); Maier, Thomas, Dr., 1790 Copenhagen (DK); Trost, Jürgen, 72661 Grafenberg (DE); Volk, Gert, Dr., 70563 Stuttgart (DE); Ahlert, Günter, 73257 Köngen (DE); Rothmund, Martin, 71263 Weil der Stadt (DE); Thomas, Wolfram, 71364 Winnenden (DE)
(74) Vertreter: LENZING GERBER

(56) Entgegenhaltungen:
- DE-A- 2 721 556
- DE-A- 2 834 419
- DE-C- 19 615 544

## Beschreibung

Die Erfindung betrifft eine hydraulische Servolenkung nach dem Oberbegriff des Anspruchs 1 für nicht spurgebundene Fahrzeuge, insbesondere Kraftfahrzeuge, mit
- einer fahrerseitig betätigten Lenkhandhabe, z.B. Lenkhandrad,
- einem mit gelenkten Fahrzeugrädern zu deren Lenkverstellung zwangsgekoppelten, doppeltwirkenden hydraulischen Stellmotor (Lenkaktuator),
- einer motorisch, insbesondere elektrisch, betätigten Servoventilanordnung, welche über einen Druckanschluß mit der Druckseite einer Hydraulikpumpe, über einen Niederdruckanschluß mit der Saugseite der Hydraulikpumpe oder einem mit der Saugseite kommunizierenden Hydraulikreservoir und über zwei Motoranschlüsse mit den beiden Seiten des Stellmotors verbunden ist und bei arbeitender Pumpe eine Druckdifferenz zwischen den Motoranschlüssen bezüglich Maß und Richtung zu steuern gestattet, und
- einer elektronischen Regelanordnung, welche einen von der Lenkhandhabe betätigten Lenkwinkel-Sollwertgeber sowie einen mit den gelenkten Fahrzeugrädern betätigten Lenkwinkel-Istwertgeber aufweist und das Servoventil in Abhängigkeit von einem Soll-Istwert-Vergleich regelt.

Bei derzeit in Kraftzeugen üblichen hydraulischen Servolenkungen sind ein Lenkhandrad und die gelenkten Fahrzeugräder miteinander mechanisch zwangsgekoppelt. Als Servomotor dient typischerweise eine doppeltwirkende Kolben-Zylinder-Einheit, die in Abhängigkeit von den zwischen dem Lenkhandrad und den gelenkten Fahrzeugrädern wirksamen Kräften und Momenten derart gesteuert wird, daß am Lenkhandrad nur begrenzte Kräfte vom Fahrer aufgebracht werden müssen. Die Zwangskopplung zwischen Lenkhandrad und gelenkten Fahrzeugrädern umfaßt zwei relativ zueinander bewegliche Teile, deren Relativbewegungen bezüglich Maß und Richtung analog zu den zwischen Lenkhandrad und gelenkten Fahrzeugrädern wirkenden Kräften bzw. Momenten sind. Diese Relativbewegungen werden auf ein den Servomotor steuerndes Servoventil übertragen, so daß zu den zwischen Lenkhandrad und gelenkten Fahrzeugrädern wirksamen Kräften und Momenten analoge Servokräfte erzeugt werden können.

Außerdem werden derzeit für normale Straßenfahrzeuge geeignete Lenkungen konzipiert, bei denen auf jegliche mechanische Zwangskopplung zwischen der Lenkhandhabe bzw. dem Lenkhandrad und den gelenkten Fahrzeugrädern verzichtet wird. Vielmehr sind hier die Lenkhandhabe bzw. das Lenkhandrad und die gelenkten Fahrzeugräder bei Normalbetrieb über eine Regelstrekke miteinander nur wirkungsmäßig gekoppelt, wobei die Lenkhandhabe bzw. das Lenkhandrad einen Sollwertgeber für den jeweils gewünschten Lenkwinkel betätigen, welcher dann von der Regelstrecke an den Fahrzeuglenkrädern, denen ein Lenkwinkel-Istwertgeber zugeordnet ist, eingeregelt wird.

Dabei kann die Regelstrecke weitere Parameter berücksichtigen und beispielsweise das Übersetzungsverhältnis zwischen dem Stell- bzw. Drehhub der Lenkhandhabe bzw. des Lenkhandrades und der Lenkwinkeländerung der gelenkten Fahrzeugräder in Abhängigkeit von der Fahrzeuggeschwindigkeit verändern. Außerdem kann gegebenenfalls Schleuderbewegungen des Fahrzeuges bzw. Seitenwindeinflüssen automatisch entgegengesteuert werden, bevor der Fahrer eine geeignete Lenkkorrektur auszuführen vermag.

Aus der DE 196 27 893 C1 ist eine Lenkung der eingangs angegebenen Art bekannt, bei der bei normalem Betrieb keine Zwangskopplung zwischen Lenkhandhabe und gelenkten Fahrzeugrädern vorliegt. Für den Notfall ist eine normalerweise auf Freilauf geschaltet hydraulische Kopplung zwischen Lenkhandhabe und gelenkten Fahrzeugrädern vorgesehen. Diese hydraulische Kopplung wird automatisch wirksam geschaltet, sobald im elektronisch geregelten und ohne Zwangskopplung zwischen Lenkhandhabe und gelenkten Fahrzeugrädern arbeitenden Hauptsystem ein Fehler erkannt wird.

Lenksysteme gemäß der DE 196 27 893 C1 verwirklichen also das Konzept "Steer by wire".

DE 196 15 544 C1 beschreibt eine Servolenkung für ein Kraftfahrzeug, bei der zwei unabhängig voneinander angetriebene Hydraulikpumpen jeweils über ein eigenes Servoventil mit einem Stellzylinder der Servolenkung verbindbar sind, wobei mittels eines ersten elektromagnetisch betätigbaren Schaltventils und eines zweiten elektromagnetisch betätigbaren Schaltventils eine Umstellung der hydraulischen Beaufschlagung der Stellvorrichtung auf jeweils die eine oder die andere Pumpe und ihr zugeordnetes Servoventil ermöglicht ist.

DE 27 21 556 beschreibt eine Servolenkung für ein Kraftfahrzeug, bei der im Normalfall eine erste reguläre Hydraulikpumpe mit einer ersten Stellvorrichtung der Lenkung und eine zweite reguläre Hydraulikpumpe mit einer zweiten Stellvorrichtung verbunden ist. Mittels eines Wechselventils sowie weiterer Ventile kann eine Notpumpe auf entweder den einen oder den anderen hydraulischen Kreis aufgeschaltet werden, je nachdem, welcher der Kreise ausgefallen ist.

DE 28 34 419 A beschreibt eine Servolenkung für ein Kraftfahrzeug, bei der ein Umschaltventil zwischen zwei separat antreibbaren Pumpen und einem einzelnen, einem Stellmotor der Servolenkung vorgelagerten Servoventil angeordnet ist, um wahlweise die eine Pumpe oder die andere Pumpe mit dem Servoventil zu verbinden.

Aufgabe der Erfindung ist es, hierfür eine vorteilhafte Konstruktion aufzuzeigen.

Diese Aufgabe wird erfindungsgemäß nach Anspruch 1 dadurch gelöst, daß Servoventilanordnung sowie Pumpe unter Bildung zweier bzw. mehrerer paralleler Hydraulikkreise doppelt bzw. mehrfach angeordnet sind, daß zwischen den Hydraulikkreisen und dem Stellmotor ein Wechselventil vorgesehen ist, das in jeder seines Stellungen jeweils einen anderen Hydraulikkreis mit dem Stellmotor verbindet und die übrigen Hydraulikkreise gegenüber dem Stellmotor absperrt, und daß eine mit einer Sensorik zur Erfassung von Betriebsparametern der Hydraulikkreise und/oder mit der Regelanordnung kombinierte elektronische Überwachungseinrichtung bei Störungen im mit dem Stellmotor verbundenen Hydraulikkreis und/oder in der diesem Hydraulikkreis zugeordneten Regelstrecke der Regelanordnung das Wechselventil ansteuert, um einen ungestörten Hydraulikkreis bzw. einen Hydraulikkreis mit ungestörter Regelstrecke mit dem Stellmotor zu verbinden.

Die Erfindung beruht auf dem allgemeinen Gedanken, zumindest zwei gleichwertige parallele Hydraulikkreise vorzusehen, die voneinander gesondert geregelt und überwacht werden, von denen jedoch nur einer wirksam mit dem Stellmotor verbunden ist. Im Falle einer Störung kann dann der Stellmotor mit einem voll funktionstüchtigen Hydraulikkreis verbunden werden, wobei keinerlei merkliche Änderung des Betriebsverhaltens der Lenkung zu befürchten ist, weil der nunmehr mit dem Stellmotor kommunizierende Hydraulikkreis zuvor trotz seiner Abtrennung vom Stellmotor sämtliche zur Steuerung des Stellmotors notwendigen Arbeitsschritte ausgeführt hat. Bei Umschaltung des Wechselventiles übernimmt also der jeweils nachfolgende Hydraulikkreis unterbrechungslos die Arbeit des zuvor mit dem Stellmotor verbundenen Hydraulikkreises.

Gemäß einer besonders bevorzugten Ausführungsform der Erfindung bilden der Stellmotor und das Wechselventil einen Baueinheit, derart, daß keinerlei Leckagen zwischen Stellmotor und Wechselventil auftreten können.

Des weiteren ist es vorteilhaft, wenn alle Teile der Hydrauliksysteme unter einem gewissen Überdruck stehen. Damit läßt sich sicher vermeiden, daß Luft in das Hydrauliksystem eindringen kann.

In diesem Zusammenhang kann vorteilhaft vorgesehen sein, jedes Hydraulikreservoir als Niederdruckbehälter auszubilden, so daß auch saugseitig der Hydraulikpumpen eine hydraulische Vorspannung gewährleistet wird.

Wenn durch konstruktive Maßnahmen sichergestellt wird, daß die Pumpen keinerlei Luft ansaugen können, kann gegebenenfalls auch vorgesehen sein, jedes Hydraulikreservoir drucklos zu halten und in den von den Servoventilen zum Reservoir zurückführenden Rücklaufleitungen eine Drossel anzuordnen, so daß bei Pumpbetrieb eingangsseitig dieser Drossel und damit an allen Anschlüssen des Servoventiles ein Mindestdruck auftreten muß.

Im übrigen wird hinsichtlich der technischen Merkmale der Erfindung auf die Ansprüche sowie die nachfolgende Erläuterung der Zeichnungen verwiesen.

Dabei zeigt
- Fig. 1: eine schaltplanartige Darstellung einer ersten Ausführungsform der Erfindung und
- Fig. 2: eine entsprechende Darstellung einer abgewandelten Ausführungsform.

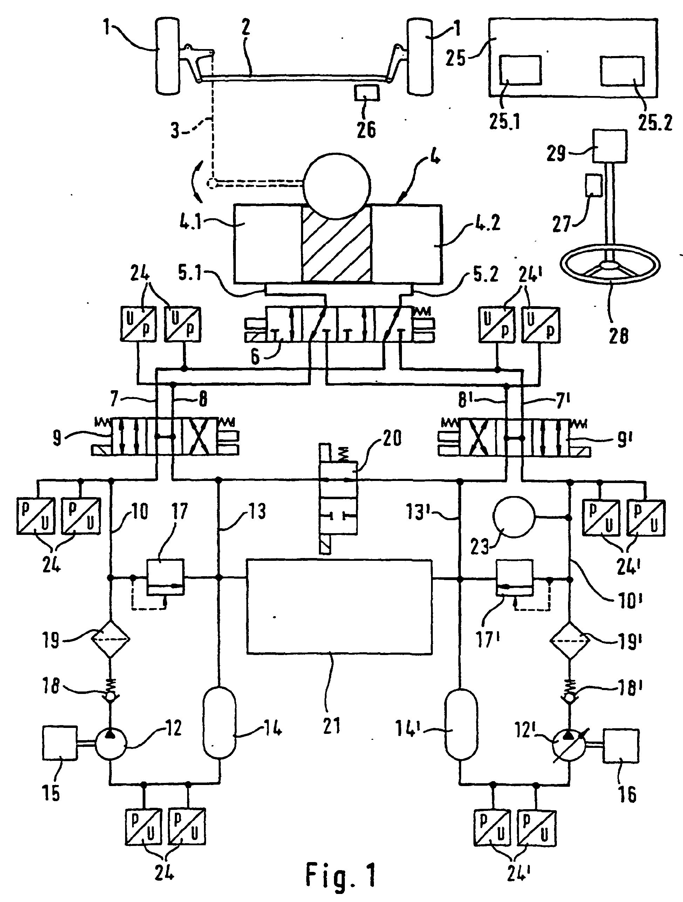

Gemäß Fig. 1 besitzt ein nicht näher dargestelltes Kraftfahrzeug zwei lenkbare Fahrzeugräder 1, die in grundsätzlich bekannter Weise über eine Spurstange 2 miteinander gekoppelt und über ein Lenkgestänge 3 mit einem doppeltwirkenden hydrostatischen Stellmotor 4 verbunden sind, derart, daß eine Lenkwinkeländerung der gelenkten Fahrzeugräder 1 immer mit einem entsprechenden Hub des Stellmotors verbunden ist.

Der Stellmotor 4 ist als doppeltwirkendes Kolben-ZylinderAggregat mit beidseitig eines Kolbens angeordneten Hydraulikkammern 4.1 und 4.2 ausgebildet.

Die beiden Hydraulikkammern 4.1 und 4.2 sind über Leitungen 5.1 und 5.2 mit einem Wege- bzw. Wechselventil 6 verbunden, welches zwischen zwei Stellungen umschaltbar ist und die vorgenannten Leitungen 5.1 und 5.2 entweder mit Motoranschlüssen 7 und 8 eines Servoventiles 9 mit offener Mitte oder mit Motoranschlüssen 7' und 8' eines ebenfalls mit offener Mitte arbeitenden Servoventiles 9' verbindet. Die Druckanschlüsse der Servoventile 9 und 9' sind über Druckleitungen 10 und 10' mit Druckseite von Pumpen 12 und 12' verbunden. Die Rücklaufanschlüsse der Servoventile 9 und 9' münden über Niederdruckleitungen 13 und 13' in jeweils ein Reservoir 14 bzw. 14', an das auch die Saugseite der jeweiligen Pumpe 12 bzw. 12' angeschlossen ist.

Die Pumpen 12 und 12' werden in unterschiedlicher Weise angetrieben. Beispielsweise kann die Pumpe 12' durch einen vorzugsweise regelbaren Elektromotor 16 angetrieben sein, während die Pumpe 12 mit Teilen eines Antriebstranges 15 des Fahrzeuges, beispielsweise angetriebenen Fahrzeugrädern, antriebsmäßig verbunden sein kann und dementsprechend arbeitet, solange das Fahrzeug rollt. Da im Antriebstrang 16 ständig wechselnde Drehzahlen auftreten können, kann die Pumpe 12 gegebenenfalls zur Kompensation der wechselnden Drehzahlen als regelbare Pumpe ausgebildet sein, wie es für die Pumpe 12' beispielhaft dargestellt ist.

Zwischen der Druckleitung 10 bzw. 10' und der Niederdruckleitung 13 bzw. 13' ist jeweils ein Überdruckventil 17 bzw. 17' angeordnet. Außerdem kann in der Druckleitung 10 bzw. 10' jeweils vor dem Eingang des zugeordneten Überdruckventiles 17 bzw. 17' ein Rückschlagventil 18 bzw. 18' angeordnet sein, durch das ein Rückstrom in der jeweiligen Druckleitung 10 bzw. 10' verhindert wird. Im übrigen ist jeweils druckseitig der Pumpe 12 bzw. 12' eine Filteranordnung 19 bzw. 19' vorgesehen.

Die beiden Niederdruckleitungen 13 und 13' können über ein Absperrventil 20 miteinander verbunden bzw. voneinander abgesperrt werden.

Darüber hinaus ist den beiden Niederdruckleitungen 13 und 13' eine Aufladevorrichtung 21 zugeordnet, durch die die Niederdruckleitungen 13 und 13' auf einen vorgegebenen Überdruck gebracht werden können, welcher im Vergleich zum möglichen Druck auf der Druckseite der Pumpen 12 und 12' gering ist. Aufgrund der Anordnung der Aufladevorrichtung 21 stehen auch das Reservoir 14 und das Reservoir 14' unter entsprechenden Überdruck. Deshalb ist jedes Reservoir 14 bzw. 14' als Niederdruckbehälter ausgebildet.

Gegebenenfalls kann druckseitig der Pumpen 12 und 12' jeweils ein Druckspeicher vorgesehen sein. Im Beispiel der Fig. 1 ist ein solcher Druckspeicher 23 nur der Druckleitung 10' zugeordnet.

Durch eine Vielzahl von Drucksensoren 24 bzw. 24' können hydraulische Drücke an verschiedenen Abschnitten der hydraulischen Systeme erfaßt werden.

Eine Steuer- und Regelanordnung 25 ist eingangsseitig mit mindestens einem Lenkwinkel-Istwertgeber 26, der beispielsweise über die Spurstange 2 entsprechend der Lenkverstellung der Räder 1 betätigt wird, sowie mit mindestens einem Lenkwinkel-Sollwertgeber 27 verbunden, welcher fahrerseitig über ein Lenkhandrad 28 betätigt wird.

Des weiteren ist das Lenkhandrad 28 mit einem Handkraftsteller 29 antriebsmäßig gekoppelt, welcher beispielsweise durch einen selbsthemmungsfreien Elektromotor gebildet werden kann, der seinerseits durch die Steuer- und Regelanordnung 25 gesteuert wird; hierzu wird die Ausführungen weiter unten verwiesen.

Das dargestellte System funktioniert wie folgt:

Bei normalem Betrieb wird das Wechselventil 6 gegen die Kraft seiner Rückstellfederung durch entsprechende Bestromung seiner Stellmagnete von der Steuer- bzw. Regelanordnung 25 in seine nicht dargestellte andere Lage umgeschaltet und in dieser Lage gehalten. Damit ist die Hydraulikkammer 4.1 mit der Motorleitung 8' und die Hydraulikkammer 4.2 mit der Motorleitung 7' verbunden. Die Motorleitungen 7 und 8 sind zum Stellmotor 4 hin abgesperrt.

Vom Fahrer wird durch Betätigung des Lenkhandrades 28 über den davon gesteuerten Lenkwinkel-Sollwertgebe 27 ein Lenkwinkel-Sollwert vorgegeben. Die Steuer- und Regelanordnung 25 vergleicht diesen Sollwert mit dem vom Lenkwinkel-Istwertgeber 26 gelieferten Lenkwinkel-Istwert und steuert in Abhängigkeit vom Soll-Istwert-Vergleich des Lenkwinkels die Servoventile 9 und 9', und zwar parallel und funktional gleichgerichtet, derart, daß zwischen den Motorleitungen 7 und 8 einerseits und 7' und 8' andererseits gleichgerichtete und zumindest größenordnungsmäßig ähnliche Druckdifferenzen auftreten.

Diese Druckdifferenzen können durch die den Motorleitungen 7 und 8 sowie den Motorleitungen 7' und 8' zugeordneten Drucksensoren 24 und 24' hinsichtlich Maß und Richtung erfaßt werden. Damit kann die Steuer- und Regelanordnung 25 gegebenenfalls das Servoventil 9, dessen Motorleitungen 7 und 8 zum Stellmotor 4 hin durch das Wechselventil 6 abgesperrt sind, so einregeln, daß die Druckdifferenz zwischen den Motorleitungen 7 und 8 weitestgehend der Druckdifferenz zwischen den Motorleitungen 7' und 8' angepaßt wird, die über das Wechselventil 6 mit dem Stellmotor 4 verbunden sind.

Die Druckdifferenz zwischen den Motorleitungen 7' und 8' liegt auch zwischen den Hydraulikkammern 4.1 und 4.2 des Stellmotors 4 vor und bewirkt eine entsprechende Stellkraft. Aufgrund des Soll-Istwert-Vergleiches des Lenkwinkels durch die Steuer- und Regelanordnung 25 und die damit bewirkte Steuerung des Servoventiles 9' erzeugt also der Stellmotor 4 eine mit zunehmender Soll-Istwert-Differenz zunehmende Stellkraft in einer die Soll-Istwert-Differenz verringernden Stellrichtung.

Im Ergebnis folgt somit die Lenkbewegung der gelenkten Fahrzeugräder 1 der Verstellung des Lenkhandrades 24 nach rechts oder links.

Gleichzeitig wird am Lenkhandrad 28 eine vom Handkraftsteller 29 erzeugte Handkraft fühlbar, welche mit den Stellkräften des Stellmotors 4 bezüglich Maß und Richtung korreliert ist. Dazu kann der Handkraftsteller 29 von der Steuer- und Regelanordnung 25 in Korrelation zu den zwischen den Kammern 4.1 und 4.2 vorliegenden Druckdifferenzen gesteuert werden, die durch die Drucksensoren 24' an den Motorleitungen 7' und 8' ermittelt werden.

Die Steuer- und Regelanordnung 25 ist mehrfach redundant ausgebildet und besitzt insbesondere separate Regelstrecken 25.1 und 25.2 zur Steuerung der Servoventile 9 und 9'.

Darüber hinaus ist die Steuer- und Regelanordnung 25 als Überwachungsvorrichtung ausgebildet bzw. mit einer Überwachungsvorrichtung kombiniert, welche die Signale aller Drucksensoren 24 und 24' auswertet. Außerdem können noch weitere (nicht dargestellte) Sensoren vorhanden sein, die die Stellungen der Servoventile 9 und 9' bzw. die Funktion weiterer Elemente erfassen. Alternativ oder zusätzlich kann die Stellung der Servoventile 9 und 9' auch durch Erfassung der elektrischen Steuerströme der Stellmagnete dieser Ventile ermittelt werden.

Sollte nun festgestellt werden, daß im Hydraulikkreis des Servoventiles 9', dessen Motorleitungen 7' und 8' über das Wechselventil 6 mit dem Stellmotor 4 verbunden sind, und/oder in der diesem Servoventil 9' zugeordneten Regelstrecke 25.2 ein Fehler aufgetreten ist, wird der elektrische Strom für die Stellmagnete des Wechselventiles 6 abgeschaltet, mit der Folge, daß das Wechselsystem 6 die in Fig. 1 dargestellte Lage einnimmt. Damit sind nunmehr die Motorleitungen 7 und 8 des Servoventiles 9 mit dem Stellmotor 4 verbunden. Dies ist gleichbedeutend damit, daß nachfolgend die Stellkraft des Stellmotors 4 von der Steuer- und Regelanordnung 25 durch die Betätigung des Servoventiles 9 gesteuert wird.

Da der dem Servoventil 9 zugeordnete Hydraulikkreis auch bei Normalbetrieb arbeitet und dementsprechend an den Motorleitungen 7 und 8 ständig ein zur Druckdifferenz an den Motorleitungen 7' und 8' analoge Druckdifferenz vorliegt, solange der Normalbetrieb gegeben ist, kann die Steuerung des Stellmotors 4 beim Umschalten des Wechselventiles 6 verzögerungsfrei über das Servoventil 9 erfolgen, welches nachfolgend ausschließlich in Korrelation zur Soll-Istwert-Abweichung des Lenkwinkels betätigt wird.

Da die Druckleitungen 10 und 10' bei normalem Betrieb durch die Pumpen 12 und 12' unter Druck gehalten und die Niederdruckleitungen 13 und 13' durch die Aufladevorrichtung 21 vor der Fahrt des Fahrzeuges unter Überdruck gesetzt werden, stehen alle Anschlüsse der Servoventile 9 und 9' ständig unter Überdruck, mit der Folge, daß im Stellmotor 4 keinerlei Unterdruck auftreten kann und ein Eindringen von Luft in den Stellmotor 4 sicher vermieden wird. Durch Überwachung des Überdruckes während der Fahrt können Leckagen erkannt werden.

Gegebenenfalls kann die Aufladevorrichtung 21 entfallen und statt dessen vorgesehen sein, das gesamte Hydrauliksystem vor Inbetriebnahme - einmalig - unter Druck zu setzen. Solange der dadurch bewirkte Überdruck im System bestehen bleibt, ist Leckagefreiheit gegeben.

Aufgrund unvermeidlicher Leckagen zwischen den Anschlüssen des Wechselventiles 6 kommt es beim Betrieb zu einer - sehr schwachen - parasitären Kopplung zwischen dem Hydraulikkreis des Servoventiles 9 und dem Hydraulikkreis des Servoventiles 9'. Um zu vermeiden, daß damit im Laufe der Zeit in den Reservoirs 14 und 14' unterschiedliche Füllmengen auftreten, kann das Absperrventil 20 bei normalem Betrieb von Zeit zu Zeit oder dauernd geöffnet bzw. offengehalten werden, so daß ein Austausch von Hydraulikmedium zwischen den beiden Reservoirs 14 und 14' ermöglicht wird. Sollte allerdings eine Undichtigkeit in einem Hydraulikkreis erkannt werden, wird das Absperrventil 20 geschlossen.

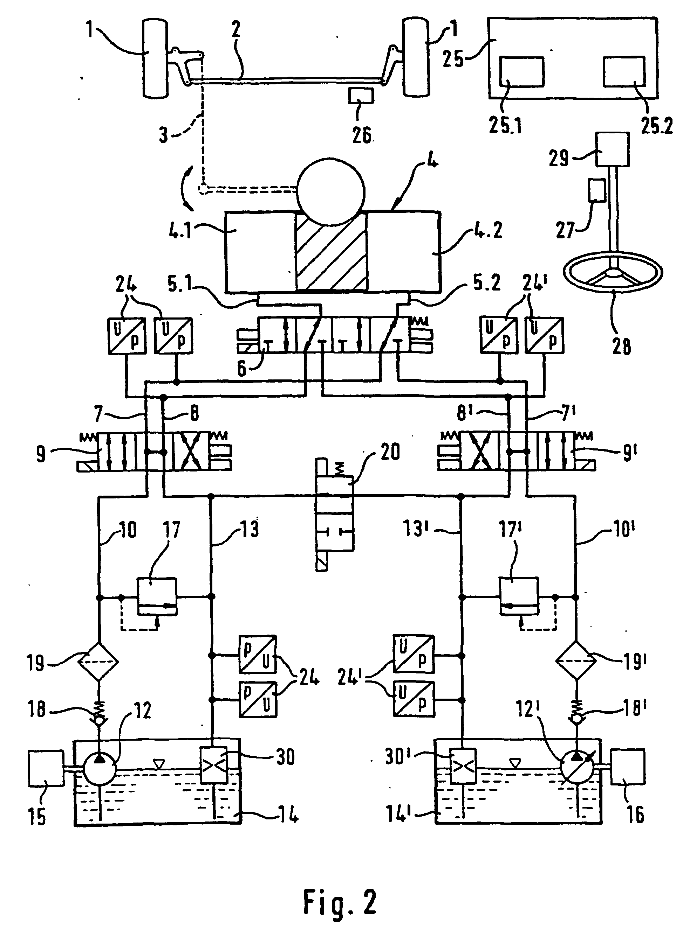

Die Ausführungsform nach Fig. 2 unterscheidet sich von der Ausführungsform der Fig. 1 im wesentlichen dadurch, daß beide Reservoirs 14 und 14' immer drucklos sind. Um nun gleichwohl beim Betrieb des Lenksystems in den Rückführleitungen 13 und 13' einen gewissen Überdruck herstellen und damit alle Anschlüsse der Servoventile 9 und 9' unter Überdruck halten zu können, sind an den Mündungen der Leitungen 13 und 13' in die Reservoirs 14 und 14' jeweils Drosseln 30 bzw. 30' angeordnet. Darüber hinaus sind die Reservoirs 14 und 14' so ausgebildet, daß die Pumpen 9 und 9' keinesfalls Luft ansaugen können. Zu diesem Zweck sind die Saugmündungen der Pumpen 9 und 9' bzw. der zugehörigen Saugleitungen weit unterhalb des Pegels des Hydraulikmediums in den Reservoirs 14 und 14' angeordnet. Die Funktion des Systems der Fig. 2 entspricht der Funktion des Systems der Fig. 1.

Bei der Ausführungsform der Fig. 2 kann das Absperrventil 20 im geöffneten Zustand beim Lenkbetrieb in der Regel nicht die Funktion übernehmen, den Hydraulikfluß, der durch parasitäre Kopplung der den Pumpen 12 und 12' zugeordneten Hydraulikkreise über das Ventil 6 verursacht werden kann, zu kompensieren. Deshalb wird das Ventil für normalen Betrieb geschlossen und im wesentlichen nur für Servicezwecke geöffnet. Gegebenenfalls kann das Ventil 20 auch entfallen.

Ein Ausgleich der Flüssigkeitsmengen in den Reservoirs 14 und 14' kann durch eine in Fig. 2 nicht dargestellte Überlaufleitung erfolgen, deren Mündungen bzw. an den Reservoirs 14 und 14' jedoch so angeordnet sein müssen, daß im Falle einer Leckage eines Hydraulikkreises das Reservoir des anderen Hydraulikkreises nicht leerlaufen kann.

## Patentansprüche

1. Hydraulische Servolenkung für nicht spurgebundene Fahrzeuge, insbesondere Kraftfahrzeuge, mit einer fahrerseitig betätigten Lenkhandhabe, z.B. Lenkhandrad (28),
einem mit gelenkten Fahrzeugrädern (1) zu deren Lenkverstellung zwangsgekoppelten, doppeltwirkenden hydraulischen Stellmotor (4) bzw. Lenkaktuator,
einer motorisch, insbesondere elektrisch, betätigten Servoventilanordnung (9,9'), welche über einen Druckanschluss (10,10') mit der Druckseite einer Hydraulikpumpe (12,12'), über einen Niederdruckanschluss (13,13') mit der Saugseite der Hydraulikpumpe oder einem mit der Saugseite kommunizierenden Hydraulikreservoir (14,14') und über zwei Motoranschlüsse (7,8;7',8') mit den beiden Seiten des Stellmotors verbunden ist und bei arbeitender Pumpe eine Druckdifferenz zwischen den Motoranschlüssen bezüglich Maß und Richtung zu steuern gestattet, und
einer elektronischen Regelanordnung (25), welche einen von der Lenkhandhabe (28) betätigten Lenkwinkel-Sollwertgeber (27) sowie einen mit den gelenkten Fahrzeugrädern (1) betätigten Lenkwinkel-Istwertgeber (26) aufweist und das Servoventil in Abhängigkeit von einem Soll-Istwert-Vergleich regelt,
wobei Servoventilanordnung (9,9') sowie Pumpe (12,12') unter Bildung zweier bzw. mehrerer paralleler Hydraulikkreise doppelt bzw. mehrfach angeordnet sind, und
wobei eine mit einer Sensorik (24,24') zur Erfassung von Betriebsparametern der Hydraulikkreise und/oder mit der Regelanordnung (25) kombinierte elektronische Überwachungseinrichtung bei Störungen im mit dem Stellmotor (4) verbundenen Hydraulikkreis und/oder in der diesem Hydraulikkreis zugeordneten Regelstrecke (25.1,25.2) der Regelanordnung (25) das Wechselventil (6) ansteuert, um einen ungestörten Hydraulikkreis bzw. einen Hydraulikkreis mit ungestörter Regelstrecke mit dem Stellmotor zu verbinden.
**dadurch gekennzeichnet,**
**dass** zwischen den Hydraulikkreisen und dem Stellmotor (4) ein Wechselventil (6) vorgesehen ist, das in jeder seiner Stellungen jeweils einen anderen Hydraulikkreis mit dem Stellmotor (4) verbindet und die übrigen Hydraulikkreise gegenüber dem Stellmotor absperrt.

2. Servolenkung nach Anspruch 1, **dadurch gekennzeichnet, dass** der Stellmotor (4) und das Wechselventil (6) eine Baueinheit bilden, derart, dass Leckagen zwischen Stellmotor und Wechselventil ausgeschlossen sind.

3. Servolenkung nach Anspruch 1 oder 2, **dadurch gekennzeichnet, dass** jedes Reservoir (14,14') als Niederdruckbehälter ausgebildet ist und unter Überdruck steht.

4. Servolenkung nach einem der Ansprüche 1 bis 3, **dadurch gekennzeichnet, dass** in den die Niederdruckanschlüsse der Servoventile (9,9') mit dem zugehörigen Reservoir (14,14') verbindenden Leitungen (13,13') jeweils eine Drossel (30,30') angeordnet ist.

5. Servolenkung nach einem der Ansprüche 1 bis 4, **dadurch gekennzeichnet, dass** eine durch ungeregelten Antrieb (16) angetriebene Pumpe (12') regelbar ist.

6. Servolenkung nach einem der Ansprüche 1 bis 5, **dadurch gekennzeichnet, dass** zwischen den Reservoirs (14,14') ein Absperrventil (20) angeordnet ist.

7. Servolenkung nach einem der Ansprüche 1 bis 6, **dadurch gekennzeichnet, dass** die Überwachungsanordnung in die Regelanordnung (25) integriert ist.

8. Servolenkung nach einem der Ansprüche 1 bis 7, **dadurch gekennzeichnet, dass** die Servoventile (9,9') mit offener Mitte ausgebildet sind.

9. Servolenkung nach einem der Ansprüche 1 bis 8, **dadurch gekennzeichnet, dass** druckseitig zumindest einer Pumpe (9') ein Druckspeicher (23) angeordnet ist.

10. Servolenkung nach einem der vorhergehenden Ansprüche, **dadurch gekennzeichnet, dass** bei normalem Betrieb zwischen Motorleitungen (7, 8) eines mit dem Stellmotor (4) verbundenen Hydraulikkreises einerseits und Motorleitungen (7', 8') eines zum Stellmotor (4) hin abgesperrten Hydraulikkreises andererseits gleichgerichtete und zumindest größenordnungsmäßig ähnliche Druckdifferenzen auftreten.

## Claims

1. Hydraulic power steering for vehicles not bound to tracks, in particular motor vehicles, with a steering handle, e.g. steering hand wheel (28), actuated on the driver side,
a dual-action hydraulic servomotor (4) or steering actuator, compulsorily coupled to articulated vehicle wheels (1) to adjust their steering,
a servo valve arrangement (9, 9'), actuated by motor, in particular electrically, which is connected via a pressure union (10, 10') to the pressure side of a hydraulic pump (12, 12'), via a low pressure union (13, 13') to the suction side of the hydraulic pump or a hydraulic reservoir (14, 14') communicating with the suction side and via two motor connections (7, 8; 7', 8') to the two sides of the servomotor and when the pump is operating allows a difference in pressure between the motor connections to be controlled in respect of dimension and direction, and
an electronic automatic control arrangement (25), which has a steering angle desired value generator (27) actuated by the steering handle (28) and a steering angle actual value generator (26) actuated by the articulated vehicle wheels (1) and controls the servo valve as a function of a desired and actual value comparison,
wherein both the servo valve arrangement (9, 9') and the pump (12, 12') are arranged in duplicate or multiply, forming two or more parallel hydraulic circuits and
wherein an electronic monitoring device with sensor technology (24, 24') to detect operating parameters of the hydraulic circuits and/or combined with the automatic control arrangement (25) activates the shuttle valve (6) in the event of faults in the hydraulic circuit connected to the servomotor (4) and/or in the controlled system (25.1, 25.2) of the automatic control arrangement (25) allocated to this hydraulic circuit, in order to connect an undisturbed hydraulic circuit or a hydraulic circuit with an undisturbed controlled system to the servomotor,
**characterised in that**
between the hydraulic circuits and the servomotor (4) a shuttle valve (6) is provided, which in each of its positions connects a different hydraulic circuit in each case to the servomotor (4) and shuts off the remaining hydraulic circuits from the servomotor.

2. Power steering according to claim 1, **characterised in that** the servomotor (4) and the shuttle valve (6) form a constructional unit in such a way that leakages between the servomotor and the shuttle valve are ruled out.

3. Power steering according to claim 1 or 2, **characterised in that** each reservoir (14, 14') is constructed as a low pressure tank and is under excess pressure.

4. Power steering according to one of claims 1 to 3, **characterised in that** a throttle (30, 30') is arranged in each case in the lines (13, 13') connecting the low pressure unions of the servo valves (9, 9') to the associated reservoir (14, 14').

5. Power steering according to one of claims 1 to 4, **characterised in that** a pump (12') driven by uncontrolled drive (16) can be automatically controlled.

6. Power steering according to one of claims 1 to 5, **characterised in that** a shut-off valve (20) is arranged between the reservoirs (14, 14').

7. Power steering according to one of claims 1 to 6, **characterised in that** the monitoring arrangement is integrated into the automatic control arrangement (25).

8. Power steering according to one of claims 1 to 7, **characterised in that** the servo valves (9, 9') are constructed with an open centre.

9. Power steering according to one of claims 1 to 8, **characterised in that** a pressure store (23) is arranged on the pressure side of at least one pump (9').

10. Power steering according to one of the preceding claims, **characterised in that** in normal operation pressure differences pointing in the same direction and similar at least as far as size is concerned occur between motor lines (7, 8) of a hydraulic circuit connected to the servomotor (4) on the one hand and motor lines (7', 8') of a hydraulic circuit shut off towards the servomotor (4) on the other hand.

## Revendications

1. Direction assistée hydraulique pour véhicules non guidés sur voie, en particulier des véhicules automobiles, comprenant une manette de braquage actionnée par le conducteur, par exemple un volant de braquage (28), un servomoteur (4) ou un actionneur de braquage hydraulique à double effet, couplé de force avec des roues de véhicule guidés pour leur déplacement de braquage, un dispositif de servo-soupape (9, 9') actionné par moteur, en particulier de façon électrique, qui est relié au moyen d'un branchement de pression (10, 10') au côté pression d'une pompe hydraulique (12, 12'), au moyen d'un branchement de basse pression (13, 13') au côté aspiration de la pompe hydraulique ou à un réservoir hydraulique (14, 14') communiquant avec le côté aspiration et au moyen de deux branchements de moteur (7, 8 ; 7', 8') aux deux côtés du servomoteur et permet de commander une différence de pression entre les branchements de moteur en ce qui concerne la mesure et la direction lorsque la pompe travaille, et un dispositif de réglage (25) électronique, qui présente un générateur de valeur de consigne d'angle de braquage (27) actionné par la manette de braquage (28) et un générateur de valeur réelle d'angle de braquage (26) actionné avec les roues de véhicule (1) guidées et règle la servo-soupape en fonction d'une comparaison de valeur de consigne-valeur réelle, le dispositif de servo-soupape (9, 9') et la pompe (12, 12') étant disposés en double ou en plusieurs exemplaires en formant deux ou plusieurs circuits hydrauliques parallèles, et un dispositif de contrôle électronique, combiné avec un capteur (24, 24') pour l'enregistrement de paramètres de service des circuits hydrauliques et/ou avec le dispositif de réglage (25), actionnant le dispositif de vanne à deux voies (6) en cas d'incidents survenant dans le circuit hydraulique relié au servomoteur (4) et/ou dans le tronçon de réglage (25.1, 25.2) du dispositif de réglage (25) attribué à ce circuit hydraulique, afin de relier un circuit hydraulique non perturbé ou un circuit hydraulique avec un tronçon de réglage non perturbé au servomoteur, **caractérisée en ce qu'**il est prévu entre les circuits hydrauliques et le servomoteur (4) un dispositif de vanne à deux voies (6), qui relie dans chacune de ses positions à chaque fois un autre circuit hydraulique au servomoteur (4) et bloque les autres circuits hydrauliques par rapport au servomoteur.

2. Direction assistée selon la revendication 1, **caractérisée en ce que** le servomoteur (4) et le dispositif de vanne à deux voies (6) forment un module de telle sorte que des fuites entre le servomoteur et le dispositif de vanne à deux voies sont exclues.

3. Direction assistée selon la revendication 1 ou 2, **caractérisée en ce que** chaque réservoir (14, 14') est conçu comme un réservoir à basse pression et est soumis à une surpression.

4. Direction assistée selon l'une quelconque des revendications 1 à 3, **caractérisée en ce qu'**un dispositif d'étranglement (30, 30') est disposé dans chacune des conduites (13, 13') reliant les branchements basse pression des servo-soupapes (9, 9') au réservoir (14, 14') correspondant.

5. Direction assistée selon l'une quelconque des revendications 1 à 4, **caractérisée en ce qu'**une pompe (12') entraînée par un entraînement (16) non réglée est réglable.

6. Direction assistée selon l'une quelconque des revendications 1 à 5, **caractérisée en ce qu'**une vanne d'arrêt (20) est disposée entre les réservoirs (14, 14').

7. Direction assistée selon l'une quelconque des revendications 1 à 6, **caractérisée en ce que** le dispositif de contrôle est intégré dans le dispositif de réglage (25).

8. Direction assistée selon l'une quelconque des revendications 1 à 7, **caractérisée en ce que** les servo-soupapes (9, 9') sont conçues avec un centre ouvert.

9. Direction assistée selon l'une quelconque des revendications 1 à 8, **caractérisée en ce qu'**un accumulateur de pression (23) est disposé côté pression d'au moins une pompe (9').

10. Direction assistée selon l'une quelconque des revendications précédentes, **caractérisée en ce que**, avec un fonctionnement normal, des différences de pressions orientées dans le même sens et au moins du même ordre de grandeur apparaissent entre les conduites de moteur (7, 8) d'un circuit hydraulique relié au servomoteur (4) d'une part et les conduites de moteur (7', 8') d'un circuit hydraulique fermé en direction du servomoteur (4).
